# EUROPÄISCHE PATENTANMELDUNG

(11) **EP 4 213 388 A1**
(43) Veröffentlichungstag der Anmeldung: **19.07.2023**
(21) Anmeldenummer: 22151890.5
(22) Anmeldetag: 17.01.2022
(51) Int. Cl.: H03K 19/177, G06F 21/52

(54) **KONFIGURIERBARE LOGIK-VORRICHTUNG UND COMPUTER-IMPLEMENTIERTE TABELLE**

(71) Anmelder: Siemens AG Österreich, 1210 Wien (AT)
(72) Erfinder: Chilku, Bekim, 1190 Wien (AT); Hinterstoisser, Thomas, 2102 Bisamberg (AT); Matschnig, Martin, 3430 Tulln (AT); Cech, Christian, 2483 Ebreichsdorf (AT); Fischer, Bernhard, 1060 Wien (AT)
(74) Vertreter: Siemens Patent Attorneys

(57) **Zusammenfassung**

Konfigurierbare Logik-Vorrichtung (FPGA1) mit einer programmierbaren Logik (PL1), umfassend ein dynamisches Logik-Modul (DLM1) mit Speicher-Elementen (M1-M3) und Logik-Elementen (L1-L3), ein Kontroll-Modul (CM) zur Konfiguration des dynamisches Logik-Moduls (DLM1) und zumindest ein, mit einem Daten-Bus (BUS) verbundenes Daten-Modul (CPU, MEM, DMA, P1-Pn), welches dazu eingerichtet ist, Daten dem Daten-Bus (BUS) bereitzustellen oder vom Daten-Bus (BUS) zu lesen, wobei das dynamische Logik-Modul (DLM1) ferner eine Schnittstellen-Logik (SL) aufweist, welche mit dem Daten-Bus (BUS) verbunden ist und dazu eingerichtet ist, dem Daten-Modul (CPU, MEM, DMA, P1-Pn) über den Daten-Bus (BUS) einen direkten Zugriff auf die Speicher-Elemente (M1-M3) und/oder die Logik-Elemente (L1-L3) des dynamischen Logik-Moduls (DLM1) zu erlauben.

## Beschreibung

Die Erfindung betrifft eine konfigurierbare Logik-Vorrichtung mit einer programmierbaren Logik, umfassend ein dynamisches Logik-Modul mit Speicher-Elementen und Logik-Elementen, ein Kontroll-Modul zur Konfiguration des dynamisches Logik-Moduls und zumindest ein, mit einem Daten-Bus verbundenes Daten-Modul, welches dazu eingerichtet ist, Daten dem Daten-Bus bereitzustellen oder vom Daten-Bus zu lesen.

Ferner betrifft die Erfindung eine computer-implementierte Tabelle.

Für fast alle modernen Mobilgeräte wie Smartphones oder Tablets stehen Software-Apps zur Verfügung. Diese kleinen Programme können die Standardfunktionalität des Geräts bei Bedarf individuell erweitern. Apps können über einen App-Store erworben und installiert werden, der von einem Dienstanbieter unterhalten wird. Diese wohlbekannten und weithin akzeptierten Konzepte aus dem Bereich der Mobilkommunikation werden zunehmend auch in anderen Sektoren wie Automotive, Industrial Control und Automation eingeführt, in denen strengere Sicherheitsanforderungen berücksichtigt werden müssen.

FPGA-Bausteine (engl. "Field Programmable Gate Arrays") bieten eine große Flexibilität in Bezug auf Anwendungsoffenheit, da sie während der Laufzeit (engl. "on-the-fly") umkonfiguriert werden können. Neueste FPGA-Produkte bieten die Möglichkeit, sogar nur Teile der Konfiguration auszutauschen, während der Rest des Systems störungsfrei weiterläuft. Diese Funktion wird auch als DPR (engl. "Dynamic Partial Reconfiguration") bezeichnet, ist sehr leistungsstark und in gängigen modernen SRAM-basierten FPGAs verfügbar, z. B. Intel STRATIX oder XILINX Zync Ultrascale+.

Standard-FPGAs beherbergen sehr unterschiedliche Arten von konfigurierbaren Ressourcen wie DSPs (engl. "digital signal processor cells"), LUTs (engl. "look up tables") und Speicherblöcke, die sich über den gesamten verfügbaren programmierbaren Logikbereich befinden.

Ein Nachteil des DPR-Ansatzes besteht darin, dass alle Ressourcen in den reservierten Containern in allen Fällen blockiert werden, selbst wenn der Container nicht benötigt wird oder eine Hardware-App (HWA) klein ist und nicht die gesamte verfügbare Logik benötigt, die der Container bietet. Folglich stehen nicht alle Speicherblöcke, die sich in derzeit ungenutzten Containern befinden, zur Verfügung, und im schlimmsten Fall muss dem System mit zusätzlichen Kosten für Geld und Energieverbrauch zusätzliches externes RAM hinzugefügt werden.

Die dynamische partielle Rekonfiguration verleiht modernen FPGA-Designpraktiken viel Flexibilität und führt in den meisten Fällen zu kleineren Geräten und reduziert die Gesamtstücklistenkosten.

Dennoch kann es in sehr seltenen Fällen vorkommen, dass die gewonnene Flexibilität größere Geräte erfordert und eine Kosten-Nutzen-Abwägung durchgeführt werden muss, um die optimale Lösung zu finden.

Die Veröffentlichung K. Vipin and S. A. Fahmy, "Efficient region allocation for adaptive partial reconfiguration," in 2011 International Conference on Field-Programmable Technology, New Delhi, India, Dec. 2011, pp. 1-6, doi: 10.1109/ FPT.2011.6133248 zeigt einen Ansatz, um die optimale Konfiguration für ein Design mit mehreren rekonfigurierbaren Bereichen zu finden.

Darin wird ein automatisierter Werkzeugfluss vorgeschlagen, bei dem mehrere mögliche Konfigurationen generiert und verglichen werden. Es ist gezeigt, dass die Platzierung von HWAs in verschiedenen Containern sehr unterschiedliche Ergebnisse in Bezug auf Timing oder Flächenverbrauch bringen kann.

Darüber hinaus müssen DPR-Partitionen groß genug ausgelegt werden, um die größtmögliche HWA aufnehmen zu können, auch wenn in der aktuellen Konfiguration nur eine kleinere HWA geladen werden kann.

Eine intelligente Lösung zur Nutzung von Ressourcen in ungenutzten HWA-Containern könnte helfen, dieses Dilemma zu überwinden

Um den DPR-Mechanismus nutzen zu können, muss ein spezieller rechteckiger Bereich, Container genannt, innerhalb des verfügbaren Platzes ausschließlich für das Hosten kleinerer austauschbarer Teildesigns, sogenannter "Hardware Apps" (HWAs), reserviert werden.

Bei einer HW-App handelt es sich um eine Logik, welche zur Laufzeit im FPGA geladen und ausgeführt werden kann. Es wird nur ein Teil des FPGAs neu konfiguriert (partielle Rekonfiguration). Dafür werden Bereiche im FPGA definiert, die ein bestimmtes Kontingent an Ressourcen (Logik Elemente, Block RAMs und DSPs) für die HW-Apps zur Verfügung stellen. Die reservierten Ressourcen können jedoch nur von den HW-Apps genutzt werden und stehen Funktionen außerhalb dieses Bereiches nicht zur Verfügung. Abhängig von der HW-App Anforderung, werden die Ressourcen innerhalb dieses Bereichs unterschiedlich stark genutzt. Da für die Dimensionierung des konfigurierbaren Bereichs die Summe aller maximalen benötigten Ressourcen jeder einzelnen HW-App herangezogen wird, entsteht ein gewisser Overhead an nicht genutzten Ressourcen im FPGA.

Es ist Aufgabe der Erfindung eine Befehlsabfolge durch eine programmierbare Logik unter optimalem Ressourceneinsatz auszuführen.

Mit anderen Worten sollen die Ressourcen eines Prozessors mit einem Speicher, insbesondere den Speicher innerhalb eines FPGAs, besser genutzt werden.

Die erfindungsgemäße Aufgabe wird durch eine programmierbare Logik eingangs genannter Art gelöst, wobei das dynamische Logik-Modul ferner eine Schnittstellen-Logik aufweist, welche mit dem Daten-Bus verbunden ist und dazu eingerichtet ist, dem Daten-Modul über den Daten-Bus einen direkten Zugriff auf die Speicher-Elemente und/oder die Logik-Elemente des dynamischen Logik-Moduls zu erlauben.

Unter einem Daten-Modul wird im vorliegenden Zusammenhang eine Daten-Quelle beziehungsweise Daten-Senke verstanden, beispielsweise ein Speicher, ein Speicher-Zugriff per DMA (engl. "direct memory access"), Peripheriegeräte, aber auch ein Prozessor oder ein Co-Prozessor und andere Module, die Daten bereitstellen oder empfangen und weiterleiten können.

Unter einem dynamischen Logik-Modul wird im vorliegenden Zusammenhang eine rekonfigurierbare Digital-Logik verstanden, welche initial oder auch während des Betriebs konfigurierbar ist. Dabei kann eine vollständige oder auch nur teilweise Rekonfiguration der Digital-Logik erfolgen.

Speicher-Elemente weisen eine Speicher-Zelle und eine Adressierungs-Logik auf, über welche die Speicher-Zelle für Schreib- und Lese-Operationen angesteuert wird.

Logik-Elemente können durch einzelne Logik-Gatter oder komplexe Logik-Schaltungen gebildet sein, welche beispielsweise mathematische Operationen ausführen.

Eine Schnittstellen-Logik kann durch eine Logik-Schaltung abgebildet werden, welche ein Kommunikations-Protokoll des Daten-Bus auf die Adressierung von Speicher-Elementen für Schreib- und Lese-Operationen logisch transformiert. Dabei wird das Datenformat und das zeitliche Verhalten übersetzt.

Ein direkter Datenzugriff bedeutet im vorliegenden Zusammenhang, dass Elemente des dynamischen Logik-Moduls, wie beispielsweise Speicherelemente oder Logikelemente, direkt über die Schnittstellen-Logik adressiert und verwendet - schreibend oder lesend - werden können, ohne über das Kontroll-Modul eine Verwendung anzusteuern.

Dies hat den Vorteil, dass beispielsweise Speicherbereiche, welche durch das Logik-Moduls gebildet sind, von der programmierbare Logik direkt verwendet werden können, nämlich in Form eines direkten Lese- bzw. Schreibzugriffs auf den Speicher unter Verwendung einer Speicher-Adresse, und die dadurch System-Effizienz verbessert werden kann.

Mit anderen Worten können Speicher-Elemente und/oder Logik-Elemente innerhalb eines Containers neben ihrer eigentlichen Verwendung temporär von weiteren Anwendungen eingesetzt werden, falls sie für ihre eigentlichen Verwendung, das heißt von der aktuell geladenen HW-App nicht benötigt werden.

Analog dazu können beispielsweise digitale Logik-Elemente direkt eingebunden werden, indem Daten über den Daten-Bus bereitgestellt werden und die Logik-Operation dementsprechend ausgeführt wird, und das Ergebnis der Logik-Operation wieder über den Daten-Bus bereitgestellt wird.

Durch die Schnittstellen-Logik wird also erreicht, dass auf einzelne Elemente einer dynamisch rekonfigurierbaren Logik direkt zugegriffen werden kann.

Sollten Elemente des dynamischen Logik-Moduls für deren eigentliche Aufgabe temporär nicht verwendet werden, so können diese Ressourcen anderen Aufgaben zur Verfügung gestellt werden, wodurch die Effizienz des gesamten Systems gesteigert werden kann.

Das Kontroll-Modul dient zur Konfiguration des dynamisches Logik-Moduls. Diese Konfiguration kann eine initiale Konfiguration sein, aber auch eine Rekonfiguration, welche während des Betriebs der Logik-Vorrichtung durchgeführt werden soll. Eine Rekonfiguration kann entweder durch ein externes Signal oder durch eine ausgeführte Logik-Operation angestoßen werden.

In einer Weiterbildung der Erfindung ist es vorgesehen, dass das Kontroll-Modul dazu eingerichtet ist, Informationen über freie, aktuell ungenutzte Speicher-Elemente und/oder freie, aktuell ungenutzte Logik-Elemente des dynamischen Logik-Moduls über den Daten-Bus bereitzustellen, vorzugsweise mithilfe einer computer-implementierten Tabelle innerhalb des dynamischen Logik-Moduls.

Dadurch ist es auf einfache Weise möglich, die Ressourcen des gesamten Systems zu verwalten.

Wird die computer-implementierte Tabelle innerhalb der Programmierbare Logik konfiguriert, kann die Information über die Elemente des dynamischen Logik-Moduls auf besonders einfache Weise erfasst werden.

In einer Weiterbildung der Erfindung ist es vorgesehen, dass das Kontroll-Modul dazu eingerichtet ist, die Informationen über freie, aktuell ungenutzte Elemente periodisch erneut zu erfassen und bereitzustellen.

Dadurch ist es auf einfache Weise möglich, temporäre Rekonfigurationen zu erfassen und Informationen über freie, aktuell ungenutzte Elemente periodisch erneut zu erfassen und bereitzustellen.

In einer Weiterbildung der Erfindung ist es vorgesehen, dass das Kontroll-Modul dazu eingerichtet ist, Daten vom Daten-Modul zu erfassen und Konfigurationsänderung der programmierbaren Logik durchzuführen und die Informationen über freie, aktuell ungenutzte Elemente erneut zu erfassen und bereitzustellen.

Dadurch ist es auf einfache Weise möglich, temporäre Rekonfigurationen zu erfassen und Informationen über freie, aktuell ungenutzte Elemente nach einer durchgeführten Rekonfiguration erneut zu erfassen und bereitzustellen.

In einer Weiterbildung der Erfindung ist es vorgesehen, dass das dynamische Logik-Modul zumindest zwei Anwendungs-Logiken aufweist, welche nicht zusammenhängende Logik-Bereiche bilden, und die Speicher-Elemente und/oder Logik-Elemente, welche über die Schnittstellen-Logik und den Daten-Bus ansteuerbar sind, über die zumindest zwei Anwendungs-Logiken verteilt sind.

Unter nicht zusammenhängenden Logik-Bereichen wird im vorliegenden Zusammenhang verstanden, dass einzelne Logikbereiche in verschiedenen Hardware-Containern organisiert sind.

Dadurch ist es auf einfache Weise möglich, die Ressourcen des gesamten Systems, nämlich insbesondere in Form von Anwendungs-Logiken als Verarbeitungs-Einheiten, zu verwalten.

In einer Weiterbildung der Erfindung ist es vorgesehen, dass das dynamische Logik-Modul zumindest zwei Anwendungs-Logiken aufweist, und das Kontroll-Modul dazu eingerichtet ist, die programmierbare Logik während des Betriebs erneut zu konfigurieren.

Dadurch ist es auf einfache Weise möglich, dynamische Ressourcen des gesamten Systems, nämlich insbesondere in Form von Anwendungs-Logiken als Verarbeitungs-Einheiten, zu verwalten.

In einer Weiterbildung der Erfindung ist es vorgesehen, dass die Speicher-Elemente und/oder Logik-Elemente derart konfiguriert sind, zumindest eine Anwendungs-Logik in Form eines Co-Prozessor-Submoduls zu bilden, und mithilfe der Schnittstellen-Logik angesteuert zu werden.

Ein Co-Prozessor ist ein zusätzlicher Mikroprozessor, der einen Hauptprozessor bei seiner Arbeit unterstützt. Co-Prozessoren können bspw. mathematische sowie Gleitkomma-Operationen, Grafikoperationen, Signalverarbeitung, I/O-Verarbeitung oder Kryptographie ausführen. Dazu zählen mathematische Co-Prozessoren, Grafikprozessoren und I/O-Prozessoren.

Co-Prozessoren sollen den Hauptprozessor entlasten und durch eine speziell auf die Aufgabe abgestimmte Architektur Arbeit abnehmen. Sie können die Leistung des Systems in ihrem Aufgabengebiet erhöhen und zu einer Stromeinsparung führen.

Ein mathematischer Co-Prozessor, oft auch Gleitkommaeinheit, kann Berechnungen von Gleitkommazahlen für den Hauptprozessor übernehmen.

Ein Co-Prozessor kann auch einen zentralen Hauptprozessor unterstützen und beispielweise Ein- und Ausgabeoperationen, oder einen Speicherdirektzugriff (DMA) verarbeiten.

Als Co-Prozessoren gelten auch Prozessoren zur digitalen Signalverarbeitung (DSPs).

DSP-Blöcke, welche sich innerhalb der freien HWA-Container befinden, können beispielsweise als Ausführungseinheiten eines skalierbaren Vector-Coprozessors konfiguriert werden.

Die DPR-Funktion ermöglicht es, die Nutzung der ungenutzten HWA-Container-Ressourcen zu maximieren, indem sie als Hilfskomponenten konfiguriert werden, während sie nicht für ihre primäre Zuweisung verwendet werden.

Die freien DSP-Ressourcen werden bei nicht verwendeten HWA-Containern zur Verbesserung der Ausführungsleistung genutzt, wenn die Programmausführung auf der Haupt-CPU durch den vektoriellen Teil des Codes läuft.

Ein Vektor-Coprozessor umfasst beispielweise einen Satz von Rechen- beziehungsweise Ausführungseinheiten, eine Lade- und Speichereinheit, eine Schiebeeinheit, eine Vektorregisterdatei und einen Dispatcher.

In einer Weiterbildung der Erfindung ist es vorgesehen, dass ferner umfassend einen Prozessor und einen Co-Hauptprozessor, welche jeweils mit dem Daten-Bus verbunden sind und dazu eingerichtet sind, mithilfe der Schnittstellen-Logik das zumindest eine Co-Prozessor-Submodul anzusteuern.

Auf diese einfache Weise lässt sich ein Prozessor und ein Co-Prozessor berücksichtigen, um spezifische Aufgaben gemeinsam mit Logik-Elementen des dynamischen Logik-Moduls effizient abzuarbeiten.

In einer Weiterbildung der Erfindung ist es vorgesehen, dass im dynamischen Logik-Modul ferner ein Dispatcher und zumindest zwei Co-Prozessor-Submodule als jeweilige Anwendungs-Logik konfiguriert sind, und der Dispatcher dazu eingerichtet ist, Berechnungsaufgaben vom Prozessor-Modul oder dem Co-Prozessor über den Daten-Bus zu empfangen und zu an die zumindest zwei Co-Prozessor-Submodule zur Bearbeitung zu verteilen.

Auf diese einfache Weise lassen sich mehrere Co-Prozessor-Elemente beziehungsweise Co-Prozessor-Submodule berücksichtigen, um spezifische Aufgaben effizient abzuarbeiten.

Die erfindungsgemäße Aufgabe wird durch eine computer-implementierte Tabelle eingangs genannter Art gelöst, wobei die Tabelle Informationen über freie, aktuell ungenutzte Speicher-Elemente und/oder freie, aktuell ungenutzte Logik-Elemente des erfindungsgemäßen, dynamischen Logik-Moduls umfasst, welche vorzugsweise über den genannten Daten-Bus auslesbar ist und bevorzugt innerhalb des erfindungsgemäßen, dynamischen Logik-Moduls konfiguriert ist.

Die Erfindung wird nachfolgend anhand eines in den beigeschlossenen Zeichnungen dargestellten Ausführungsbeispiels näher erläutert. In den Zeichnungen zeigt:
- Fig. 1: ein Blockschaltbild eines ersten Ausführungsbeispiels der Erfindung,
- Fig. 2: ein Blockschaltbild eines zweiten Ausführungsbeispiels der Erfindung.

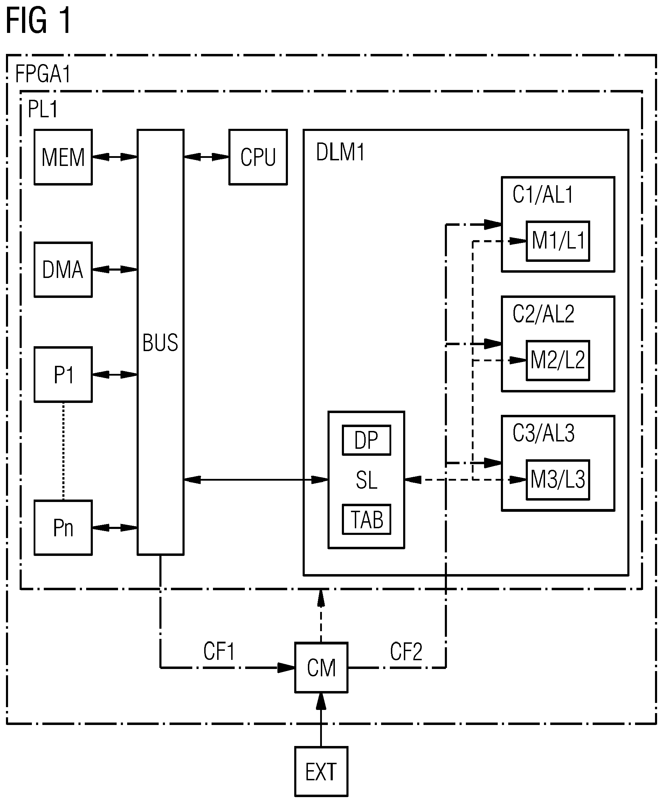

**Fig. 1** zeigt ein Blockschaltbild eines ersten Ausführungsbeispiels der Erfindung mit einer Logik auf Basis eines FPGA.

Eine konfigurierbare Logik-Vorrichtung FPGA1 mit einer programmierbaren Logik PL1 umfasst ein dynamisches Logik-Modul DLM1 mit Speicher-Elementen M1-M3 und Logik-Elementen L1-L3.

Ferner weist die konfigurierbare Logik-Vorrichtung FPGA1 ein Kontroll-Modul CM zur Konfiguration des dynamisches Logik-Moduls DLM1 auf, sowie mit einem Daten-Bus BUS verbundene Daten-Module in Form eines Prozessors CPU, eines Speichers MEM, eines direkten Speicherzugriffs-Element DMA, sowie mehrere Peripherie-Geräte P1-Pn.

Die Konfiguration des dynamisches Logik-Moduls DLM1 kann durch eine Instruktion CF1 initiiert werden, welche vom Kontroll-Modul CM ausgeführt über eine weitere Instruktion CF2 wird.

Das dynamisches Logik-Modul DLM1 kann in HWA-Containern C1-C3 organisiert sein, welche individuell durch das Kontroll-Modul CM konfiguriert werden können.

Die Daten-Module CPU, MEM, DMA, P1-Pn sind jeweils dazu eingerichtet, Daten dem Daten-Bus BUS bereitzustellen oder vom Daten-Bus BUS zu lesen.

Das dynamische Logik-Modul DLM1 weist ferner eine Schnittstellen-Logik SL auf, welche mit dem Daten-Bus BUS verbunden ist und dazu eingerichtet ist, einem oder mehreren Daten-Modulen CPU, MEM, DMA, P1-Pn über den Daten-Bus BUS einen direkten Zugriff auf die Speicher-Elemente M1-M3 und/oder die Logik-Elemente L1-L3 des dynamischen Logik-Moduls DLM1 zu erlauben.

Das Kontroll-Modul CM dient zur Konfiguration des dynamisches Logik-Moduls DLM1. Diese Konfiguration kann eine initiale Konfiguration sein, aber auch eine Rekonfiguration, welche während des Betriebs der Logik-Vorrichtung durchgeführt werden soll. Eine Rekonfiguration kann entweder durch ein externes Signal EXT oder durch eine ausgeführte Logik-Operation angestoßen werden, wie durch die strich-punktierte Line CF1, CF2 in der Figur angedeutet ist. Die Logik-Operation wird über den Daten-Bus mitgeteilt.

Das Kontroll-Modul CM ist dazu eingerichtet, Informationen über freie, aktuell ungenutzte Speicher-Elemente und/oder freie, aktuell ungenutzte Logik-Elemente des dynamischen Logik-Moduls DLM1 über den Daten-Bus BUS bereitzustellen.

Dazu kann eine computer-implementierte Tabelle TAB innerhalb des dynamischen Logik-Moduls DLM1 verwendet werden.

Die Tabelle TAB umfasst Informationen über freie, aktuell ungenutzte Speicher-Elemente und/oder freie, aktuell ungenutzte Logik-Elemente des dynamischen Logik-Moduls DLM1.

Die Tabelle TAB ist über den Daten-Bus BUS der programmierbaren Logik PL1 auslesbar.

Das Kontroll-Modul CM kann dazu eingerichtet sein, die Informationen über freie, aktuell ungenutzte Elemente M1-M3, L1-L3 periodisch erneut zu erfassen und bereitzustellen.

Alternativ kann das Kontroll-Modul CM dazu eingerichtet sein, Konfigurations-Daten vom Daten-Modul CPU, MEM, DMA, P1-Pn zu erfassen und Konfigurationsänderung der programmierbaren Logik PL1 durchzuführen und die Informationen über freie, aktuell ungenutzte Elemente M1-M3, L1-L3 erneut zu erfassen und bereitzustellen.

In diesem Beispiel weist das dynamische Logik-Modul DLM1 drei Anwendungs-Logiken AL1-AL3 auf, welche nicht zusammenhängende Logik-Bereiche bilden.

Die Speicher-Elemente M1-M3 und/oder Logik-Elemente L1-L3 sind über die drei Anwendungs-Logiken AL1-AL3 verteilt und über die Schnittstellen-Logik SL und den Daten-Bus BUS ansteuerbar.

Das Kontroll-Modul CM ist dazu eingerichtet, während des Betriebs die programmierbare Logik DLM1 erneut zu konfigurieren.

In diesem Beispiel ist unter anderem der Prozessor CPU vorgesehen, um Daten zu erzeugen und bereitzustellen. Alternativ kann auf einen Prozessor verzichtet werden und die Daten beispielsweise von einem Peripherie-Gerät P1-Pn bereitgestellt werden, wie von einem externen Daten-Modem oder einem externen Sensor.

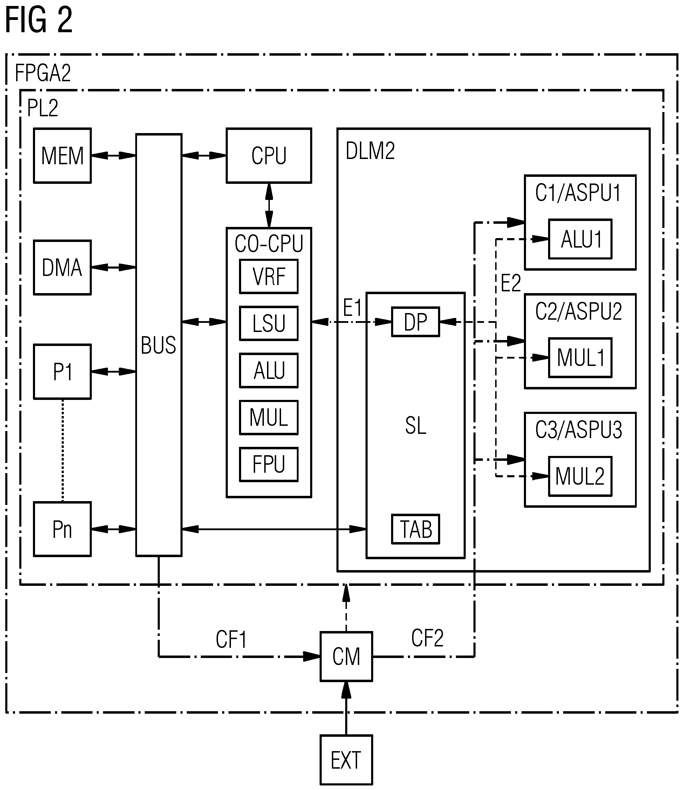

**Fig. 2** zeigt ein Blockschaltbild eines zweiten Ausführungsbeispiels der Erfindung.

Eine konfigurierbare Logik-Vorrichtung FPGA2 mit einer programmierbaren Logik PL2 umfasst ein dynamisches Logik-Modul DLM2.

Es gelten analog die Ausführungen zur vorhergehenden Figur.

Die konfigurierbare Logik-Vorrichtung FPGA2 weist ferner einen Co-Prozessor CO-CPU auf, welcher mit dem Daten-Bus BUS verbunden ist.

Der Co-Prozessor kann ein digitaler Signalprozessor (DSP) sein, welcher von einem externen Sensor Daten empfängt und mithilfe von Teilen der programmierbaren Logik PL2 weiterverarbeitet, wie im Folgenden weiter ausgeführt.

Der Co-Prozessor CO-CPU umfasst eine Vektor-Register-Datei VRF, eine Lade-/Speicher-Einheit LSU, eine Arithmetisch-Logische-Einheit ALU, eine Multiplikations-Einheit MUL und eine Fließkomma-Rechenvorrichtung FPU.

Die Speicher-Elemente und/oder Logik-Elemente sind derart konfiguriert, um drei Anwendungs-Logiken jeweils in Form von Co-Prozessor-Submodulen ASPU1-ASPU3, zu bilden.

Die Konfiguration erfolgt, indem ungenutzte HWA-Container beispielsweise als Vektorausführungseinheit ALU, MUL oder FPU gemäß einer vordefinierten Konfiguration initialisiert werden.

Die gezeigten Submodule sind eine Arithmetisch-Logische-Einheit ALU1 und zwei Multiplikations-Einheiten MUL1, MUL2.

Die Co-Prozessor-Submodule ASPU1-ASPU3 können mithilfe der Schnittstellen-Logik SL angesteuert werden.

Zur besseren Veranschaulichung ist eine strich-punktierte Line als gedachte Container-Ausführung E1 in der Figur zwischen dem Co-Prozessor CO-CPU und dem Dispatcher DP eingezeichnet, was andeuten soll, dass der Co-Prozessor CO-CPU dem Dispatcher DP Instruktionen zur Ausführung übermittelt und der Dispatcher DP die Zuweisung über eine gedachte Container-Ausführung E2 zu den Co-Prozessor-Submodule ASPU1-ASPU3 durchführt.

Im dynamischen Logik-Modul DLM2 sind ferner ein Dispatcher DP und die drei Co-Prozessor-Submodule ASPU1-ASPU3 als jeweilige Anwendungs-Logiken konfiguriert.

Die erfolgte Konfiguration von Teilen des dynamischen Logik-Moduls DLM2 und deren Verfügbarkeits-Status werden dem Dispatcher DP gemeldet.

Der Dispatcher DP ist dazu eingerichtet, Berechnungsaufgaben vom Prozessor-Modul CPU oder dem Co-Prozessor CO-CPU über den Daten-Bus BUS zu empfangen und zu an die Co-Prozessor-Submodule ASPU1-ASPU3 zur Bearbeitung zu verteilen.

Die Art der Ausführungseinheit, die im HWA-Container C1-C3 initialisiert wird, hängt von den Anforderungen des kommenden vektoriellen Codefragments ab, welches ausgeführt werden soll.

Sobald die Vektorausführungseinheit bereit ist, teilt sie dem Dispatcher DP die Anwesenheit oder Verfügbarkeit durch entsprechende Steuersignale mit.

Die HWA-Container C1-C3 benachrichtigen auch den Dispatcher DP, wenn sie nicht verfügbar sind.

Der Dispatcher DP steuert den Fluss der vektoriellen Anweisungen, indem er sie vom Prozessor CPU entgegennimmt und an eine ausgewählte Einheit ASPU1-ASPU3 ausgibt.

Wenn die Last der vektoriellen Ausführungsbefehle vom Prozessor CPU höher ist als die Kapazität der Ausführungseinheiten innerhalb des Vector-Coprozessors, dann prüft der Dispatcher DP auf verfügbare Einheiten innerhalb verfügbarer HWA-Container C1-C3 und verteilt Teile der Befehle an diese.

Dies bedeutet, dass aufgrund der Datenunabhängigkeit zwischen vektoriellen Befehlen mehr Befehle parallel ausgeführt werden können.

Der Dispatcher DP als Disponent ist auch dafür verantwortlich, strukturelle oder Datenrisiken zu vermeiden, indem er die Ausführungen von Instruktionen durch verschiedene Einheiten koordiniert.

Das genannte Konzept kann einfach als new()- und delete()-Methode für eine dedizierte vektorielle Ausführungseinheit in einem objektorientierten SW-Entwurfsfluss implementiert werden.

Die Zuweisung von Vektorausführungseinheiten in bestimmte HWA-Container C1-C3 kann automatisch im Hintergrund, auch ohne Mitwirkung des Prozessors CPU oder des Co-Prozessors CO-CPU erfolgen und völlig transparent für den Benutzer dargestellt werden.

### Bezugszeichenliste:

- AL1-AL3: Anwendungs-Logik
- ALU, ALU1: Arithmetisch Logische Einheit
- ASPU1-ASPU3: Applikationsspezifische Rechenvorrichtung
- BUS: Daten-Bus
- C1-C3: Hardware-App-Cluster, Container
- CF1, CF2: Konfigurations-Schritt
- CM: Konfigurations-Modul
- CO-CPU: Co-Prozessor
- CPU: Prozessor
- DMA: Direct-Memory-Access Vorrichtung
- DP: Dispatcher
- E1, E2: Ausführung von Container
- EXT: externes Signal
- FPGA1, FPGA2: Feld-programmierbare Logik
- FPU: Fließkomma-Rechenvorrichtung
- L1-L3: Logik
- LSU: Lade-/Speicher-Einheit
- MEM, M1-M3: Speicher
- MUL, MUL1, MUL2: Multiplikations-Rechenvorrichtung
- P1-Pn: Peripherie-Gerät
- PL1, PL2: Programmierbare Logik
- SL: Schnittstellen-Logik
- TAB: Tabelle
- VRF: Vektor-Register-Datei

## Patentansprüche

1. Konfigurierbare Logik-Vorrichtung (FPGA1, FPGA2) mit einer programmierbaren Logik (PL1, PL2), umfassend ein dynamisches Logik-Modul (DLM1, DLM2) mit Speicher-Elementen (M1-M3) und Logik-Elementen (L1-L3), ein Kontroll-Modul (CM) zur Konfiguration des dynamisches Logik-Moduls (DLM1, DLM2) und zumindest ein, mit einem Daten-Bus (BUS) verbundenes Daten-Modul (CPU, MEM, DMA, P1-Pn), welches dazu eingerichtet ist, Daten dem Daten-Bus (BUS) bereitzustellen oder vom Daten-Bus (BUS) zu lesen,
**dadurch gekennzeichnet, dass** das dynamische Logik-Modul (DLM1, DLM2) ferner eine Schnittstellen-Logik (SL) aufweist, welche mit dem Daten-Bus (BUS) verbunden ist und dazu eingerichtet ist, dem Daten-Modul (CPU, MEM, DMA, P1-Pn) über den Daten-Bus (BUS) einen direkten Zugriff auf die Speicher-Elemente (M1-M3) und/oder die Logik-Elemente (L1-L3) des dynamischen Logik-Moduls (DLM1, DLM2) zu erlauben.

2. Konfigurierbare Logik-Vorrichtung (FPGA1, FPGA2) nach dem vorhergehenden Anspruch, wobei das Kontroll-Modul (CM) dazu eingerichtet ist, Informationen über freie, aktuell ungenutzte Speicher-Elemente und/oder freie, aktuell ungenutzte Logik-Elemente des dynamischen Logik-Moduls (DLM1, DLM2) über den Daten-Bus (BUS) bereitzustellen, vorzugsweise mithilfe einer computer-implementierten Tabelle (TAB) innerhalb des dynamischen Logik-Moduls (DLM1, DLM2).

3. Konfigurierbare Logik-Vorrichtung (FPGA1, FPGA2) nach dem vorhergehenden Anspruch, wobei das Kontroll-Modul (CM) dazu eingerichtet ist, die Informationen über freie, aktuell ungenutzte Elemente (M1-M3, L1-L3) periodisch erneut zu erfassen und bereitzustellen.

4. Konfigurierbare Logik-Vorrichtung (FPGA1, FPGA2) nach Anspruch 2, wobei das Kontroll-Modul (CM) dazu eingerichtet ist, Daten vom Daten-Modul (CPU, MEM, DMA, P1-Pn) zu erfassen und Konfigurationsänderung der programmierbaren Logik (PL1, PL2) durchzuführen und die Informationen über freie, aktuell ungenutzte Elemente (M1-M3, L1-L3) erneut zu erfassen und bereitzustellen.

5. Konfigurierbare Logik-Vorrichtung (FPGA1, FPGA2) nach einem der vorhergehenden Ansprüche, wobei das dynamische Logik-Modul (DLM1, DLM2) zumindest zwei Anwendungs-Logiken (AL1-AL3, ASPU1-ASPU3) aufweist, welche nicht zusammenhängende Logik-Bereiche bilden, und die Speicher-Elemente (M1-M3) und/oder Logik-Elemente (L1-L3), welche über die Schnittstellen-Logik (SL) und den Daten-Bus (BUS) ansteuerbar sind, über die zumindest zwei Anwendungs-Logiken (AL1-AL3, ASPU1-ASPU3) verteilt sind.

6. Konfigurierbare Logik-Vorrichtung (FPGA1, FPGA2) nach einem der vorhergehenden Ansprüche, wobei das dynamische Logik-Modul (DLM1, DLM2) zumindest zwei Anwendungs-Logiken (AL1-AL3, ASPU1-ASPU3) aufweist, und das Kontroll-Modul (CM) dazu eingerichtet ist, während des Betriebs die programmierbare Logik (DLM1, DLM2) erneut zu konfigurieren.

7. Konfigurierbare Logik-Vorrichtung (FPGA2) nach einem der vorhergehenden Ansprüche, wobei die Speicher-Elemente und/oder Logik-Elemente derart konfiguriert sind, zumindest eine Anwendungs-Logik in Form eines Co-Prozessor-Submoduls (ASPU1-ASPU3) zu bilden und mithilfe der Schnittstellen-Logik (SL) angesteuert zu werden.

8. Konfigurierbare Logik-Vorrichtung (FPGA2) nach dem vorhergehenden Anspruch, ferner umfassend einen Co-Prozessor (CO-CPU), welcher mit dem Daten-Bus (BUS) verbunden ist und welcher dazu eingerichtet ist, mithilfe der Schnittstellen-Logik (SL) das zumindest eine Co-Prozessor-Submodul (ASPU1-ASPU3) anzusteuern.

9. Konfigurierbare Logik-Vorrichtung (FPGA2) nach dem vorhergehenden Anspruch, wobei im dynamischen Logik-Modul (DLM2) ferner ein Dispatcher (DP) und zumindest zwei Co-Prozessor-Submodule (ASPU1-ASPU3) als jeweilige Anwendungs-Logik konfiguriert sind und der Dispatcher (DP) dazu eingerichtet ist, Berechnungsaufgaben vom Prozessor-Modul (CPU) oder dem Co-Prozessor (CO-CPU) über den Daten-Bus (BUS) zu empfangen und zu an die zumindest zwei Co-Prozessor-Submodule (ASPU1-ASPU3) zur Bearbeitung zu verteilen.

10. Computer-implementierte Tabelle (TAB), umfassend Informationen über freie, aktuell ungenutzte Speicher-Elemente und/oder freie, aktuell ungenutzte Logik-Elemente des dynamischen Logik-Moduls (DLM1, DLM2) nach Anspruch 1, welche vorzugsweise über den Daten-Bus (BUS) der programmierbaren Logik (PL1, PL2) nach Anspruch 1 auslesbar ist.
